# EUROPEAN PATENT SPECIFICATION

(11) **EP 2 246 187 B1**
(45) Date of publication and mention of the grant of the patent: **09.04.2014**
(21) Application number: 09712377.2
(22) Date of filing: 09.02.2009
(51) Int. Cl.: B32B 27/00, B32B 27/32, B32B 27/36, H01B 13/00, H01M 8/10

(54) **FILM FOR PRODUCTION OF STRONG ACID POLYMER SHEET**
FILM ZUR HERSTELLUNG EINER STARKEN SÄUREPOLYMERFOLIE
FILM POUR PRODUCTION DE FEUILLE POLYMÈRE À ACIDE FORT

(30) Priority: 21.02.2008 JP 2008040602; 21.02.2008 JP 2008040606
(43) Date of publication of application: 03.11.2010
(73) Proprietor: Mitsubishi Plastics, Inc., Tokyo 103-0021 (JP)
(72) Inventor: TATE, Masashi, Maibara-shi Shiga 521-0234 (JP)
(74) Representative: Merkle, Gebhard
(86) International application number: PCT/JP2009/000503
(87) International publication number: WO 2009/104366

(56) References cited:
- WO-A1-2006/006713
- JP-A- 3 177 474
- JP-A- 2003 285 396
- JP-A- 2006 150 812
- JP-A- 2006 150 812
- DATABASE WPI Week 200465 Thomson Scientific, London, GB; AN 2004-663969 XP002649424, -& JP 2004 250681 A (MITSUBISHI CHEM CORP) 9 September 2004 (2004-09-09)
- DATABASE WPI Week 199137 Thomson Scientific, London, GB; AN 1991-270335 XP002649425, -& JP 3 177474 A (DAINIPPON PRINTING CO LTD) 1 August 1991 (1991-08-01)

## Description

### TECHNICAL FIELD

The present invention relates to a polyethylene naphthalate film which can be suitably used for producing a polymer electrolyte membrane employed in fuel cells, etc.

### BACKGROUND ART

From the viewpoint of reducing the burden on environments, fuel cells have been recently noticed as a clean energy source which is free from generation of carbon dioxide, nitrogen oxides, etc. In particular, solid polymer type fuel cells in which an ion exchange membrane as a central part thereof is formed from a strong acid polymer electrolyte such as perfluorosulfonic acid resins have been intensively developed because of easiness of down-sizing and an operability under a relatively low temperature condition.

Electrolyte membranes formed from such a polymer electrolyte, in particular, electrode membranes in which a platinum catalyst-supporting carbon and the like are dispersed in the electrolyte, may be frequently obtained by casting a past- or ink-like material prepared by mixing the electrolyte with a solvent on a base material film having a releasing property.

As the release film used in the conventional art, as described, for example, in Patent Document 1, there are known (1) a silicone-coated polyester film, (2) a stretched polypropylene film, (3) a fluororesin film, (4) a fluororesin-laminated polyester film, or the like. However, the silicone used as a releasing agent in these films tends to have a risk of causing contamination, whereas the films which are formed of the fluororesin singly or formed by either laminating or coating the fluororesin onto the other base material, are unsuitable for reduction in production costs of electrolyte membranes which will be demanded in the future, because the fluororesin is generally expensive and the application thereof to a release film as a consumable material must be limited in view of its cost performance. Although polyolefins such as polypropylene or polymers having a long-chain alkyl side chain are inexpensive and have a releasing property to a certain extent, they are sill unsatisfactory in releasing property and further tend to be deteriorated in heat resistance when used singly and have limitation to their use as a cast base material.

Under such a circumstance, there have been proposed a release film comprising a polyethylene terephthalate film having an excellent heat resistance as a base material and a polyolefin release layer formed thereon (Patent Document 2), and the like. However, when at a cast molding temperature of the film is raised in order to enhance a rate of production of an electrolyte membrane, the release layer tends to be melted to temporarily form a channel therein. Thus, there tends to occur a high possibility that the strong acid polymer is directly contacted with the polyethylene terephthalate film as the base material, so that the polyethylene terephthalate film tends to be corroded with the strong acid polymer to form defects thereon.

Patent Document 1: Japanese Patent Application Laid-Open (KOKAI) No. 2003-285396
Patent Document 2: Japanese Patent Application Laid-Open (KOKAI) No. 2006-150812

### DISCLOSURE OF THE INVENTION

### Problems to be Solved by the Invention

The present invention has been made to solve the above conventional problems. An object of the present invention is to provide a release film which is suitable for cast molding a sheet-like polymer structure such as an electrolyte membrane and capable of satisfying an anti-contamination property, a low production cost and an excellent heat resistance at the same time.

### Means for Solving the Problems

As a result of the present inventors' earnest study in view of the above object, it has been found that the above problems can be solved by the release film having a specific structure. The present invention has been attained on the basis of this finding.

According to the present invention, there is provided a laminated film for production of a strong acid polymer sheet, comprising:
a laminated polyester film comprising a layer comprising polyethylene terephthalate as a main component (layer A) and a layer comprising polyethylene naphthalate as a main component (layer B), and
a release layer comprising a polyolefin copolymer which is formed on the layer B of the laminated polyester film,
said layer B having a thickness of 0.5 to 2.5 µm, and
said release layer having a thickness of 75 to 150 nm as measured in terms of a wavelength of light exhibiting a maximum reflectance on a surface of the release layer.

### Effect of the Invention

In accordance with the present invention, it is possible to provide a film for production of a strong acid polymer sheet which is suitable for cast molding a sheet-like polymer structure such as an electrolyte membrane comprising a polymer electrolyte, and capable of satisfying an excellent anti-contamination property, a low production cost and an excellent heat resistance at the same time. Therefore, the present invention has a high industrial value.

### PREFERRED EMBODIMENTS FOR CARRYING OUT THE INVENTION

The present invention is described in detail below.

### <Materials used in the presentinvention>

### (Polyethylene naphthalate)

The polyethylene naphthalate used in the present invention means a polyester produced by subjecting 2,6-naphthalene dicarboxylic acid and ethylene glycol to condensation reaction, in which components other than 2,6-naphthalene dicarboxylic acid and ethylene glycol may be copolymerized therewith in an amount of not more than 10 mol%. In addition, the polyethylene naphthalate may be mixed with other polyesters, polymers and assistants unless the addition of these components adversely affects the aimed properties thereof.

### (Polyethylene terephthalate)

The polyethylene terephthalate used in the present invention means a polyester produced by subjecting terephthalic acid and ethylene glycol to condensation reaction, in which components other than terephthalic acid and ethylene glycol may be copolymerized therewith in an amount of not more than 10 mol%. In addition, the polyethylene terephthalate may be mixed with other polyesters, polymers and assistants unless the addition of these components adversely affects the aimed properties thereof.

### (Coating solution comprising polyolefin copolymer)

The above coating solution is applied onto a base material film and used for form a release layer thereon as described below. The polyolefin copolymer is preferably a polyethylene copolymer.

The polyolefin generally has a low melt point. For this reason, the polyolefin tends to be deteriorated in heat resistance, but exhibits an excellent acid resistance and a good releasing property against strong acid polymers, and therefore is suitable as a material forming a carrier surface of the film for production of a strong acid polymer sheet. However, in the case where a sheet formed from the polyolefin singly is used as a sheet to be processed, the resulting cast molded product tends to be limited in properties and productivity owing to poor heat resistance thereof. Therefore, in such a case, it is suitable to laminate the polyolefin layer on a heat-resistant base material.

As the method of laminating the polyolefin layer on the heat-resistant base material, there may be used the method in which a polyolefin film is laminated on the heat-resistant base material by using an adhesive, etc., the method in which a polyolefin is extruded and laminated on the heat-resistant base material, the method in which a solution or a dispersion of a polyolefin is applied onto the heat-resistant base material, or the like. However, when the method includes the step of melt-extruding the polyolefin, there tends to arise such a problem that (1) it is required to add a plasticizer, etc., to the polyolefin for inhibiting the polyolefin from showing an excessively high melt viscosity, or (2) it is difficult to form a flat carrier surface while reducing occurrence of thickness variation in the extrusion-molded polyolefin layer below the predetermined level. Thus, the resulting melt-extruded sheet tends to be unsuitable for use in the applications such as electronic members for which precision and cleanness are required. Therefore, it is preferred to form a release layer on the base material film by a coating method.

The content of components included as impurities in the polyolefin coating solution is desirably as low as possible from the viewpoint of preventing significant damage to cleanness of the resulting strong acid polymer sheet. The polyolefin coating solution is preferably in the form of a solution rather than a dispersion which is required to include a surfactant, etc.

For this reason, a polyethylene copolymer which is low-crystalline and has a relatively high solubility in solvents and an excellent releasing property from the strong acid polymer, is preferably used as a component constituting the release layer.

In the polyethylene copolymer applied to the release layer, as the component which is copolymerized with polyethylene, there may be used α-olefins, in particular, such as propylene, n-butene, n-pentene and n-hexene. In addition, from the viewpoint of ensuring a solubility of the polyethylene copolymer with a predetermined or higher level, it is recommended that the molar ratio of the component copolymerized in the polyethylene copolymer is not less than 10 mol%.

As the solvent used in the polyethylene copolymer solution, there may be suitably used those having a high affinity to polyethylene such as toluene and xylene. In order to improve a wettability and an antistatic property, the polyethylene copolymer coating solution may be mixed with a small amount of various organic solvents such as alcohols, ketones and alkanes.

### <First aspect not according to the invention>

The invention concerning the first aspect relates to a film for production of a strong acid polymer sheet, which comprises a polyethylene naphthalate film and a release layer which comprises a polyolefin copolymer, is formed on the polyethylene naphthalate film and has a thickness of 75 to 150 nm as measured in terms of a wavelength of light exhibiting a maximum reflectance on a surface of the release layer.

The polyethylene naphthalate is hardly corroded by the strong acid polymer even when contacted with the strong acid polymer under heating as compared to polyethylene terephthalate or polybutylene terephthalate. In addition, the polyethylene naphthalate is also excellent in heat resistance and therefore suitable as a base material for the film for production of the strong acid polymer sheet.

Examples of the coating method used upon forming the release layer include ordinary coating methods such as a bar coating method, a gravure coating method and a reverse roll coating method.

The release layer used in the present invention has a thickness of 75 to 150 nm as measured in terms of a wavelength of light exhibiting a maximum reflectance on a surface of the release layer. When the thickness of the release layer is less than 75 nm, the effect of protecting the polyethylene naphthalate by the release layer tends to be insufficient even though the polyethylene naphthalate has a relatively high acid resistance, so that the base material tends to be corroded with the strong acid polymer. When the thickness of the release layer is more than 150 nm, the peel force of the release layer from the strong acid polymer tends to be too heavy. The optimum level of the peel force varies depending upon a peeling method or a strength of the strong acid polymer sheet and therefore does not specifically determined. However, in general, when the 180° peel force exceeds 50 dN/m, the peeling process conducted after forming the strong acid polymer sheet tends to suffer from any problems. Therefore, the upper limit of the thickness of the release layer is about 150 nm.

The release layer used in the present invention may have a crosslinked structure in order to enhance a heat resistance thereof. As the crosslinking method, there may be used the method in which the polyethylene copolymer constituting the release layer is mixed with a small amount of a functional group-containing polyolefin that has a good compatibility with the copolymer, followed by crosslinking the resulting mixture, the method in which a functional group is introduced into a main chain of the polyethylene copolymer constituting the release layer, followed by crosslinking the resulting functional group-introduced copolymer, or the like.

In particular, the method in which a hydroxyl group is introduced into a main chain of the polyethylene copolymer and the hydroxyl-introduced polyethylene copolymer is crosslinked with a multi-functional isocyanate is especially preferred, because not only crosslinking between molecules of the polyolefin but also crosslinking between the polyolefin and a hydroxyl end group of polyethylene naphthalate as the base material can be promoted to thereby enhance adhesion between the release layer and the base material and further attain the effect of suppressing corrosion of the base material with the strong acid polymer.

### <Invention>

The invention relates to a laminated film for production of a strong acid polymer sheet, comprising a laminated polyester film comprising a layer comprising polyethylene terephthalate as a main component (layer A) and a layer comprising polyethylene naphthalate as a main component (layer B), and a release layer comprising a polyolefin copolymer which is formed on the layer B of the laminated polyester film, wherein the layer B has a thickness of 0.5 to 2.5 µm, and the release layer has a thickness of 75 to 150 nm as measured in terms of a wavelength of light exhibiting a maximum reflectance on a surface of the release layer.

As the base material used in the present invention, there is used a laminated polyester film comprising a layer comprising polyethylene terephthalate as a main component and a surface layer comprising polyethylene naphthalate as a main component. The surface of the laminated polyester film on which the release layer is to be formed must be constituted from the layer comprising polyethylene naphthalate as a main component, but the opposite surface of the film may not be necessarily formed from the surface layer comprising polyethylene naphthalate as a main component.

There is such a possibility that the surface of the laminated polyester film on which the release layer is formed, is contacted with the strong acid polymer through a channel which might be eventually formed in the release layer when exposed to high-temperature heating condition. Therefore, the surface of the laminated polyester film must be formed from the layer comprising the polyethylene naphthalate having a relatively high resistance to the strong acid polymer as a main component.

Form the viewpoint of a high resistance to the strong acid polymer, it may be considered that a polyethylene naphthalate film is used as the base material. However, the polyethylene naphthalate has a resin unit price as high as several times that of polyethylene terephthalate. Further, when the polyethylene naphthalate film is produced by using a production facility for polyethylene terephthalate films, it is required to modify the facility so as to enable high-temperature stretching. Thus, it is not necessarily suitable from the viewpoint of costs to apply the polyethylene naphthalate film to a carrier sheet which is generally used in a disposable manner.

The film of the present invention is generally produced according to the method for producing a polyethylene terephthalate film. In addition, in the present invention, the laminated polyester film obtained by laminating the polyethylene naphthalate surface layer on the polyethylene terephthalate layer which can also be imparted with a high resistance to the strong acid polymer is used as the base material. However, in this case, since the polyethylene terephthalate and polyethylene naphthalate are considerably different in glass transition point from each other, the temperature condition used during the step of stretching the laminated polyester film may be not necessarily optimum for any of the materials.

Thus, the base material film used in the present invention may be generally produced according to the method for producing a polyethylene terephthalate film. Therefore, the stretching conditions are preferably determined according to those used for the polyethylene terephthalate film. As a result, since the polyethylene naphthalate surface layer is stretched by cold stretching whose temperature is less than a glass transition point thereof, it is required that the thickness of the surface layer is not more than 2.5 µm from the viewpoint of suppressing occurrence of problems owing to the cold stretching. On the other hand, from the viewpoint of a good resistance to the strong acid polymer, it is required that the thickness of the polyethylene naphthalate surface layer is not less than 0.5 µm. Meanwhile, even when the thickness of the polyethylene naphthalate surface layer is not more than 2.5 µm, if the proportion of the thickness of the polyethylene naphthalate surface layer to a total thickness of the laminated film is too high, it may be difficult to uniformly stretch the laminated film. For this reason, it is preferred that the proportion of the thickness of the polyethylene naphthalate surface layer be not more than about 5% of the total thickness of the laminated film.

In the invention concerning the second aspect of the present invention, the release layer may be produced by the same method as used for producing the release layer in the invention concerning the first aspect.

### EXAMPLES:

The present invention is described in more detail below by Examples. However, these Examples are only illustrative and not intended to limit the present invention thereto. Meanwhile, the term "part(s)" used in the following Examples and Comparative Examples represents "part(s) by weight" as a solid content. Further, various evaluation methods used in the present invention were as follows.

### (1) Resistance to strong acid polymer:

Two milliliters of a dispersion of a strong acid polymer (dispersion "Nafion (registered trademark) DE2021" produced by DuPont K.K.) were dropped on a releasing surface of a sample, and spread thereover using a Baker-type applicator to produce a 10 mil-thick wet sheet. The thus obtained wet sheet was immediately dried in a hot air oven at an atmospheric temperature of 160°C for 10 min to form a membrane on the releasing surface of the sample. Successively, a 25 µm-thick adhesive tape "No. 31B" produced by Nitto Denko Corp., was attached to a back surface of the membrane, and then the "No. 31B" was peeled off together with the membrane from the releasing surface of the sample at a peel angle of 180° and a peel rate of 30 m/min. The releasing surface of the sample was observed using a cofocal laser microscope to confirm whether or not a migration trace (recess) having a depth of not less than 0.5 µm was present thereon. When no migration trace was observed, it was recognized that the sample had a good resistance to the strong acid polymer.

### (2) Peel force (unit: dN/m) of strong acid polymer sheet:

Two milliliters of a dispersion of a strong acid polymer (dispersion "Nafion (registered trademark) DE2021" produced by DuPont K.K.) were dropped on a releasing surface of a sample, and spread thereover using a Baker-type applicator to produce a 10 mil-thick wet sheet. The thus obtained wet sheet was immediately dried in a hot air oven at an atmospheric temperature of 160°C for 10 min to form a membrane on the releasing surface of the sample. Successively, a adhesive tape "No. 31B" having a width of 50 mm (produced by Nitto Denko Corp.) was attached to a back surface of the membrane. Thereafter, the release film and the strong acid polymer membrane were cut into a width of 50 mm such that both the widths were aligned with the size of the adhesive tape. Then, the "No. 31B" was peeled off together with the membrane from the releasing surface of the sample at a peel angle of 180° and a peel rate of 300 mm/min. The value obtained by dividing an average peel load as measured above by the width of 50 mm, was determined as the peel force of the sheet.

### (3) Thickness of release layer:

A black vinyl tape ("No. 21" produced by Nitto Denko Corp.) was attached onto a surface of the sample opposed to its surface to be measured. Using a spectrophotometer ("UV-3100PC" produced by Shimadzu Seisakusho Corp.), 5 absolute reflectance values on the surface to be measured were measured in the wavelength range of 200 to 2000 nm. The peak wavelength of light exhibiting a maximum peak of reflectance which was present on the longest wavelength side among all the maximum peaks as measured was divided by 3.0, and the obtained value was determined as the thickness of the release layer. Meanwhile, when calculating the thickness of the release layer in terms of the reflectance, it was assumed that the refractive index of the polyethylene copolymer constituting the release layer was 1.5.

### (Production of coating solution of polyethylene copolymer: coating solution A)

A mixture of 2-hydroxyethyl methacrylate and a peroxide (tradename "PERHEXA 25" produced by Nippon Shokubai Co., Ltd.) (weight ratio of 19:1) was added to an ethylene/propylene rubber (tradename "EP02P" produced by JSR), and the resulting mixture was kneaded together at 200°C, thereby producing a modified polyethylene copolymer grafted with 1% by weight of 2-hydroxyethyl methacrylate. The thus obtained modified polyethylene copolymer was mixed with toluene, and the resulting mixture was refluxed while stirring for 5 hr, thereby obtaining a solution having a polyolefin concentration of 3% by weight. Immediately before being coated, the resulting solution was mixed with a multi-functional isocyanate ("Mytec NY718A" produced by Mitsubishi Chemical Corporation) in an amount of 2.9% by weight based on the weight of the polyethylene copolymer, thereby obtaining a coating solution A.

### (Production of coating solution of polyethylene copolymer: coating solution B)

Ninety nine parts of an ethylene/propylene rubber (tradename "EP02P" produced by JSR) and 1 part of a polyolefin polyol (tradename "Polytale" produced by Mitsubishi Chemical Corporation) were mixed with toluene, and the resulting mixture was refluxed while stirring for 5 hr, thereby obtaining a solution having a polyolefin concentration of 3% by weight. Immediately before being coated, the resulting solution was mixed with a multi-functional isocyanate (tradename "Mytec NY718A" produced by Mitsubishi Chemical Corporation) and triethyl diamine (tradename "1,4-diazabicyclo[2.2.2]octane" produced by Wako Junyaku Kogyo Co., Ltd.) each in an amount of 1% by weight based on a polyolefin solid content, thereby obtaining a coating solution B.

### (Production of polyethylene naphthalate)

One hundred parts of dimethyl-2,6-naphthalate, 60 parts of ethylene glycol and 0.08 part of magnesium acetate were charged into a reactor and subjected to transesterification reaction therein. Next, 0.15 part of an amorphous silica was added to the obtained reaction mixture, and then 0.04 part of ethyl acid phosphate and 0.04 part of antimony trioxide were added thereto to conduct a polymerization therebetween by an ordinary method, thereby obtaining polyethylene naphthalate having an intrinsic viscosity of 0.55 dL/g. The thus obtained reaction product was further subjected to solid state polymerization to increase the intrinsic viscosity to 0.60 dL/g.

### <Examples and Comparative Examples concerning the first aspect which is not according to the invention>

### (Production of base material film)

The above produced polyethylene naphthalate was melted in a twin-screw extruder at 300°C, extruded into a sheet shape from the extruder through a T-die on a cast drum, and rapidly cooled thereon by an electrostatic cooling method, thereby obtaining an amorphous sheet. The resulting amorphous sheet was stretched in a longitudinal direction thereof at a stretch ratio of 4.2 times at 130°C and successively stretched in a lateral direction thereof at a stretch ratio of 4.4 times at 135°C, and finally subjected to thermal fixing at 220°C, thereby obtaining a polyethylene naphthalate film having a thickness of 50 µm.

### Example 1A (not according to the invention):

The coating solution A was diluted with toluene at 40°C to prepare a dilute coating solution having a polyolefin concentration of 0.75% by weight. The thus obtained coating solution was applied onto a polyethylene naphthalate film using a Mayer bar #4 and then heat-treated at 150°C for 5 sec, and further held at 23°C for 48 hr, thereby obtaining a release film.

### Example 2A (not according to the invention):

The coating solution A was diluted with toluene at 40°C to prepare a dilute coating solution having a polyolefin concentration of 1.6% by weight. The thus obtained coating solution was applied onto a polyethylene naphthalate film using a Mayer bar #6 and then heat-treated at 150°C for 5 sec, and further held at 23°C for 48 hr, thereby obtaining a release film.

### Example 3A (not according to the invention):

The same procedure as defined in Example 2A was conducted except that the coating solution B was used instead of the coating solution A, thereby obtaining a release film.

### Comparative Example 1A:

The coating solution A was diluted with toluene at 40°C to prepare a dilute coating solution having a polyolefin concentration of 0.5% by weight. The thus obtained coating solution was applied onto a polyethylene naphthalate film using a Mayer bar #3 and then heat-treated at 150°C for 5 sec, and further held at 23°C for 48 hr, thereby obtaining a release film.

### Comparative Example 2A:

The coating solution A was applied onto a polyethylene naphthalate film using a Mayer bar #7 and then heat-treated at 150°C for 5 sec, and further held at 23°C for 48 hr, thereby obtaining a release film.

### Comparative Example 3A:

The same procedure as defined in Example 2A was conducted except that a polyethylene terephthalate film (tradename "DIAFOIL T100-50S" produced by Mitsubishi Polyester Film Corporation) was used as the base material film instead of the polyethylene naphthalate film, thereby obtaining a release film.

**Table 1 (not according to the invention)**

| Examples and Comparative Examples | Base material | Thickness of release layer (nm) | Resistance to strong acid polymer | Peel force of strong acid polymer sheet (mN/cm) |
|---|---|---|---|---|
| Example 1A | PEN | 80 | Good | 34 |
| Example 2A | PEN | 144 | Good | 43 |
| Example 3A | PEN | 144 | Good | 43 |
| Comparative Example 1A | PEN | 70 | Migration trace was observed | 32 |
| Comparative Example 2A | PEN | 350 | Good | 73 |
| Comparative Example 3A | PET | 144 | Migration trace was observed | 43 |

### <Examples and Comparative Examples relating to the invention>

### (Production of base material polyester film A)

Polyethylene naphthalate and polyethylene terephthalate were respectively melted in two separate twin-screw extruders at 300°C, and merged into a T-die such that the polyethylene naphthalate was used to form both surface layers whereas the polyethylene terephthalate was used to form an intermediate layer. The amounts of the respective resins extruded for the surface layer, the intermediate layer and another surface layer were controlled by a gear pump such that the proportion therebetween was 1/98/1. The laminated melted liquids were extruded into a sheet shape through the T-die on a cast drum, and rapidly cooled thereon by an electrostatic cooling method, thereby obtaining an amorphous sheet. The resulting amorphous sheet was stretched in a longitudinal direction thereof at a stretch ratio of 3.6 times at 100°C and successively stretched in a lateral direction thereof at a stretch ratio of 4.0 times at 110°C, and finally subjected to thermal fixing at 220°C, thereby obtaining a polyester film A having a thickness of 50 µm.

### (Production of base material polyester film B)

A polyester film B having a thickness of 50 µm was produced in the same manner as defined above for production of the polyester film A except that the polyester film B had not the three-layer structure including a polyethylene naphthalate surface layer, a polyethylene terephthalate layer and a polyethylene naphthalate surface layer, but a two-layer structure including a polyethylene naphthalate surface layer and a polyethylene terephthalate layer (in which the ratio between amounts of the resins extruded was 1/19).

### (Production of base material polyester film C)

A polyester film C having a thickness of 50 µm was produced in the same manner as defined above for production of the polyester film A except that the ratio between amounts of the resins extruded for a polyethylene naphthalate surface layer, a polyethylene terephthalate layer and a polyethylene naphthalate surface layer was changed to 1/198/1.

### (Production of base material polyester film D)

It was attempted to produce a polyester film in the same manner as defined above for production of the polyester film A except that the ratio between amounts of the resins extruded for a polyethylene naphthalate surface layer, a polyethylene terephthalate layer and a polyethylene naphthalate surface layer was changed to 5/40/4. However, the polyethylene terephthalate surface layers of the resulting polyester film suffered from non-uniform whitened portions, so that the polyester film was not suitably used as a base material film.

### Example 1B:

The coating solution A was diluted with toluene at 40°C to prepare a dilute coating solution having a polyolefin concentration of 0.75% by weight. The thus obtained coating solution was applied onto the polyester film A using a Mayer bar #4 and then heat-treated at 150°C for 5 sec, and further held at 23°C for 48 hr, thereby obtaining a laminated film.

### Example 2B:

The coating solution A was diluted with toluene at 40°C to prepare a dilute coating solution having a polyolefin concentration of 1.6% by weight. The thus obtained coating solution was applied onto the polyester film A using a Mayer bar #6 and then heat-treated at 150°C for 5 sec, and further held at 23°C for 48 hr, thereby obtaining a laminated film.

### Example 3B:

The same procedure as defined in Example 2B was conducted except that the coating solution B was used instead of the coating solution A, thereby obtaining a laminated film.

### Example 4B:

The same procedure as defined in Example 1B was conducted except that the polyester film B was used as the base material film instead of the polyester film A, thereby obtaining a laminated film.

### Comparative Example 1B:

The coating solution A was diluted with toluene at 40°C to prepare a dilute coating solution having a polyolefin concentration of 0.5% by weight. The thus obtained coating solution was applied onto the polyester film A using a Mayer bar #3 and then heat-treated at 150°C for 5 sec, and further held at 23°C for 48 hr, thereby obtaining a laminated film.

### Comparative Example 2B:

The coating solution A was applied onto the polyester film A using a Mayer bar #7 and then heat-treated at 150°C for 5 sec, and further held at 23°C for 48 hr, thereby obtaining a laminated film.

### Comparative Example 3B:

The same procedure as defined in Example 1B was conducted except that the polyester film C was used as the base material film instead of the polyester film A, thereby obtaining a laminated film.

### Comparative Example 4B:

The same procedure as defined in Example 2B was conducted except that a polyethylene terephthalate film (tradename "DIAFOIL T100-50S" produced by Mitsubishi Polyester Film Corporation) was used as the base material film instead of the polyester film A, thereby obtaining a film.

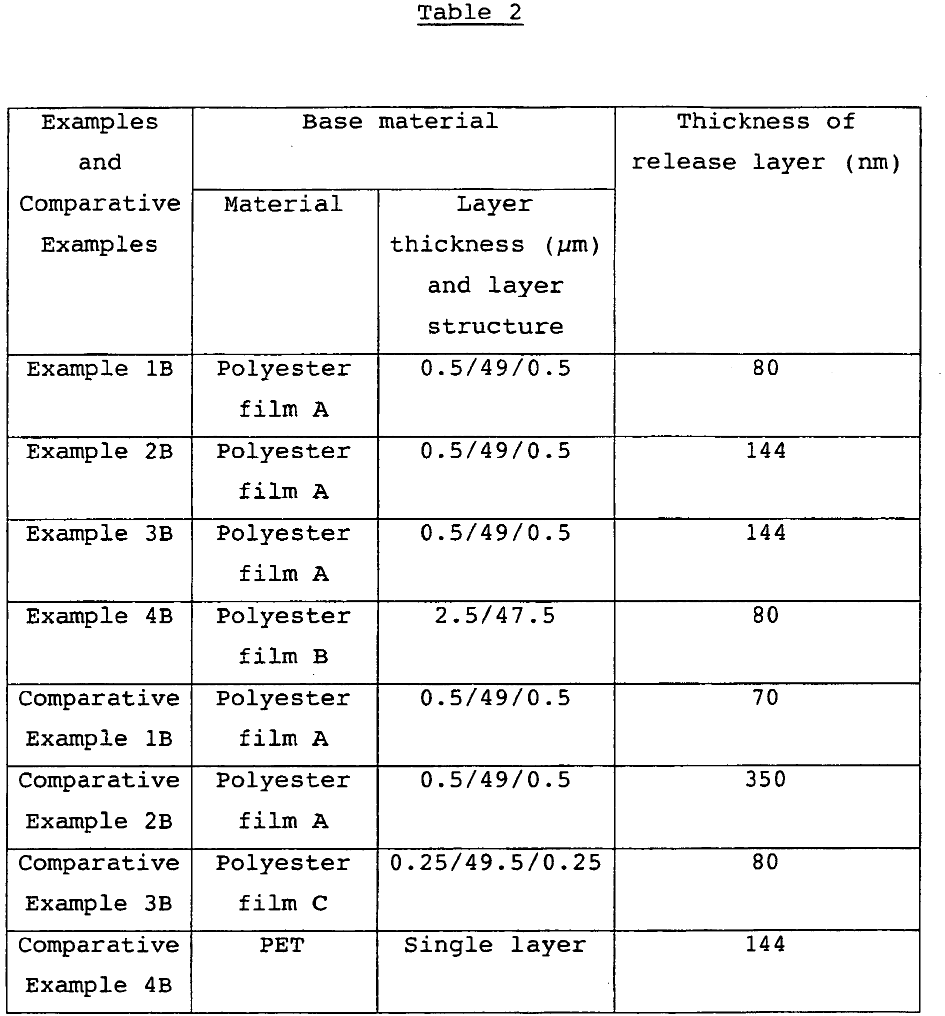

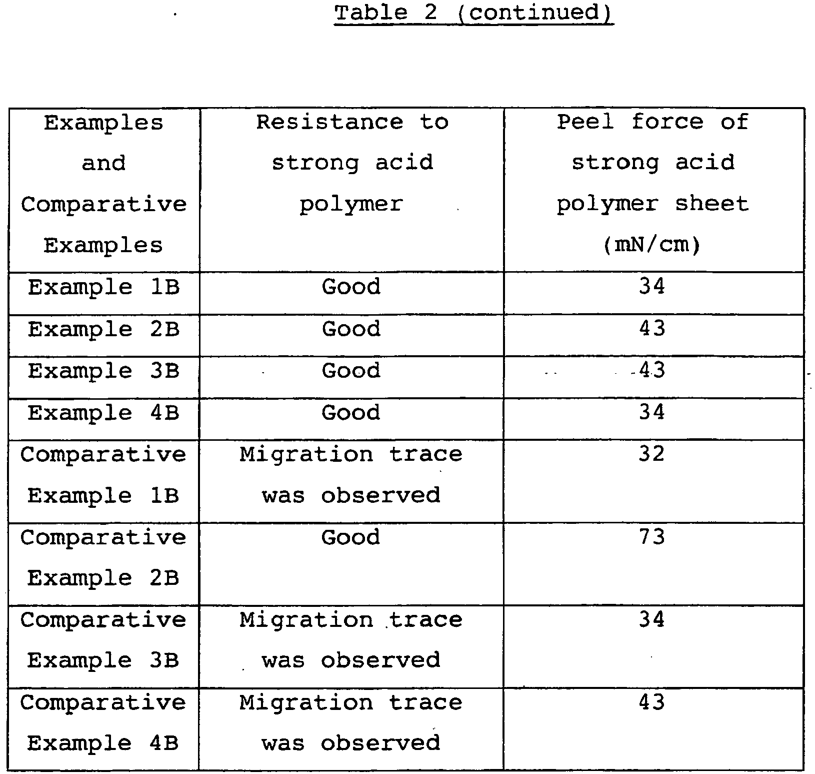

### INDUSTRIAL APPLICABILITY

The film of the present invention can be suitably used, for example, for production of a polymer electrolyte membrane applied to fuel cells, etc.

## Claims

1. A laminated film for production of a strong acid polymer sheet, comprising:
a laminated polyester film comprising a layer comprising polyethylene terephthalate as a main component (layer A) and a layer comprising polyethylene naphthalate as a main component (layer B), and
a release layer comprising a polyolefin copolymer which is formed on the layer B of the laminated polyester film,
said layer B having a thickness of 0.5 to 2.5 µm, and
said release layer having a thickness of 75 to 150 nm as measured in terms of a wavelength of light exhibiting a maximum reflectance on a surface of the release layer.

## Patentansprüche

1. Laminierter Film zur Herstellung einer starken Säurepolymerfolie, umfassend:
eine laminierte Polyesterfolie, umfassend eine Schicht, umfassend Polyethylenterephthalat als eine Hauptkomponente (Schicht A) und eine Schicht, umfassend Polyethylennaphthalat als eine Hauptkomponente (Schicht B), und
eine Trennschicht, umfassend ein Polyolefincopolymer, welche auf der Schicht B der laminierten Polyesterfolie gebildet ist,
wobei die Schicht B eine Dicke von 0,5 bis 2,5 µm besitzt, und
die Trennschicht eine Dicke von 75 bis 150 nm besitzt, gemessen in Bezug auf eine Wellenlänge von Licht, das ein maximales Reflexionsvermögen auf einer Oberfläche der Trennschicht zeigt.

## Revendications

1. Film stratifié pour la production d'une feuille polymère à acide fort, comprenant :
un film de polyester stratifié comprenant une couche comprenant du téréphtalate de polyéthylène comme composant principal (couche A) et une couche comprenant un naphtalate de polyéthylène en tant que composant principal (couche B), et
une couche de démoulage comprenant un copolymère de polyoléfine qui est formée sur la couche B du film de polyester stratifié,
ladite couche B ayant une épaisseur de 0,5 à 2,5 µm, et
ladite couche de démoulage ayant une épaisseur de 75 à 150 nm comme mesurée en terme d'une longueur d'onde de la lumière exhibant une réflectance maximale sur une surface de la couche de démoulage.
